# EUROPEAN PATENT APPLICATION

(11) **EP 3 450 199 A1**
(43) Date of publication of application: **06.03.2019**
(21) Application number: 17789935.8
(22) Date of filing: 27.04.2017
(51) Int. Cl.: B60B 21/12, B60C 19/00

(54) **VEHICLE WHEEL**

(30) Priority: 29.04.2016 KR 20160052895
(71) Applicant: Pal Co. Ltd., Gwangju 61011 (KR); Baek, Young In, Yangju-si, Gyeonggi-do 11514 (KR)
(72) Inventor: KIM, Hae Jung, Cheonan-si Chungcheongnam-do 31199 (KR)
(74) Representative: Groth, Wieland
(86) International application number: PCT/KR2017/004489
(87) International publication number: WO 2017/188751

(57) **Abstract**

The following invention relates to a vehicle wheel and more particularly, to a vehicle wheel comprising; a wheel body having four plate coupling portions; plates coupled respectively to the plate coupling portions; plates coupled respectively to the plate coupling portions; air chamber brackets of a ∩-shape each having an air chamber bracket hole formed on an upper surface thereof and respectively coupled the upper surface of the plates; and a hollow cylindrical hole bracket which is coupled through the air chamber bracket hole and moves up and down with rotation of the wheel body. As such, the present invention has the effects of significantly increasing the degree of freedom of design and the degree of freedom of resin selection due to the air chamber bracket formed by injection molding, and improving the strength by means of the air chamber bracket coupled to the wheel body. Further, the present invention is provided with the hole bracket which varies in proportion to the rotation speed of a wheel, thereby effectively reducing noise which increases or decreases according to the rotation of the wheel to provide a stable ride and minimize any discomfort of passenger caused by noise.

## Description

Following invention describe a vehicle wheel having synthetic resins air chamber providing hole bracket coupled with aluminum wheel so that it varies in proportional to rotational speed of wheel to reduce noise.

Normally, a vehicle comprises structure which supports vehicle body by air filling derived by coupling inner sphere of tire with inner parts of rim provided at wheel. While driving vehicle, noise and vibration occur as tire continuously makes friction with road(surface).

As the result, noise will give unpleasant feeling to the passenger, reducing ride comfort. Especially, noise will grow larger in high-speed traveling, so to reduce noise, various techniques are introduced such as adding absorbing material between wheel rim and tire or adding pattern on the rim. However, such techniques are lacking with durability and cannot efficiently reduce noise in accordance with rotation speed of wheel.

Furthermore, Japan patent announcement No 05819340 suggests to combine air chamber manufactured from blower form (blower molding) with wheel in tight fit and forming air hole at the side of air chamber to reduce noise induced from air chamber in the tire, which comes with problem of restricting shape of air chamber and lacking of efficiency of reducing variable noise in proportional with speed of wheel.

To resolve described problem above, following invention introduce a vehicle wheel comprising; the Air chamber brackets changing its form through injection, increasing freedom of design, and improving strength of wheel itself, and providing the variable Hole bracket in proportional with rotating speed of the wheel so that having effect of reducing noise.

A vehicle wheel targeting above purpose comprises with; a wheel body having four plate coupling portions; plates coupled respectively to the plate coupling portions; plates coupled respectively to the plate coupling portions; air chamber brackets of a ∩-shape each having an air chamber bracket hole formed on an upper surface thereof and respectively coupled the upper surface of the plates; and a hollow cylindrical hole bracket which is coupled through the air chamber bracket hole and moves up and down with rotation of the wheel body.

In more precisely, following invention comes with; a wheel body having four plate coupling portions and Plates coupled respectively to the plate coupling portions and a ∩-shape Air chamber bracket each having an Air chamber bracket hole formed on an upper surface thereof and respectively coupled the upper surface of the plates and A hollow cylindrical Hole bracket which is coupled through the Air chamber bracket hole and moves up and down followed by rotation of the Wheel body and an Air chamber brackets providing Air chamber bracket spring settings at upper side of inner side. and a Hole bracket providing Hole bracket spring settings at its side, Spring provided in the middle of Air chamber bracket spring settings and Hole bracket spring settings.

Another feature of the invention comes with; a Hole bracket coupled with a Hole bracket cap at the end of its upper side, and an Air Chamber brackets providing Hole bracket cap settings at the upper side thereof.

Another feature of the invention comes with; an Air chamber bracket hole providing Air chamber bracket planar part forming 90° angle of each Air chamber bracket hole with respect to the center of the wheel, and an Air chamber bracket hole providing air chamber bracket slope part forming 90° angle of each Air chamber bracket hole with respect to the center of the wheel.

As described above, following invention introduce a vehicle wheel comprising; the Air chamber brackets changing its form through injection, increasing freedom of design, and improving strength of wheel itself, and providing the variable Hole bracket in proportional with rotating speed of the wheel so that having effect of reducing noise in eventually, providing stable impression of riding and minimizing displeasure of a passenger.
Figure 1; perspective view of a vehicle wheel in accordance with present invention.
Figure 2; cross-sectional perspective view of a vehicle wheel in accordance with present invention.
Figure 3; top view of an air chamber bracket and a hole chamber bracket in accordance with present invention of a vehicle wheel.
Figure 4; cross-sectional diagram of an air chamber bracket and a hole chamber bracket A-A' of a vehicle wheel in accordance with present invention.
Figures 5 a,b; constitutional diagram of operating of a vehicle wheel of present invention in non-rotational/rotational state.
Figure 6; a side view of No 1 embodiment of a vehicle wheel present invention.
Figure 7; a side view of No 2 embodiment of a vehicle wheel present invention.

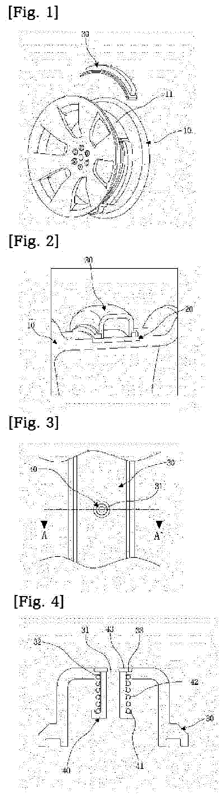

Figures 1 and 2 are in respectively describing perspective view and cross-sectional perspective view of a vehicle wheel in accordance with present invention, and figure 3 is a top view of an air chamber bracket and a hole chamber bracket in accordance with present invention of a vehicle wheel, which describe composition of present invention as following;
A vehicle wheel comprising; A wheel body(10) having four plate coupling portions(11);
A vehicle wheel comprising; Plates(20) coupled respectively to the plate coupling portions(11); A ∩-shape Air chamber bracket(30) each having an Air chamber bracket hole(31) formed on an upper surface thereof and respectively coupled the upper surface of the plates(20); A hollow cylindrical Hole bracket(40) which is coupled through the Air chamber bracket hole(31) and moves up and down followed by rotation of the Wheel body(10);
In detail, above parts comprise with an aluminium wheel body(10) and Plate(20) and synthetic resign Air chamber bracket providing an efficient injection molding. Therefore, announced adhesion technology between metal and synthetic resign will be applied to Pate(20) and Air chamber bracket(30). Normally for driving vehicle, vibration and as such will be derived from sympathetic sound coming from 200∼250Hz frequency from hollow space between wheel tire and noise and vibration will become larger from specific air pressure distribution made form impact of surface foreign substance at the tire.

However, the present invention can reduce size of empty space between Wheel body(10) and the tire by Air chamber bracket(30), and minimize specific air pressure distribution by extending circulation of air between empty space above and Air chamber bracket(30) through Air chamber hole(31). Additionally, the present invention provides effect of improving strength of the wheel by Plate(20) and Air chamber bracket(30) combined with outer side of wheel body(10).

Also, moving a hollow cylindrical Hole bracket(40) which moves up and down followed by rotation of the Wheel body(10) toward upper side in accordance with rotation speed of Wheel body(1), from which Hole bracket(40) stays within inside of Air chamber bracket(30) at low speed or stop state, and comes out of Air chamber bracket(30) at high speed changing air circulation path between space formed inside of Air chamber bracket(30) and Wheel bode(10) and tire so that minimizes noise induced from different frequency of low speed and high speed driving.

The present invention provides structure; Hole bracket(40) extracts Air chamber bracket hole(31) by motor or as such which operates through elasticity of elastic material or acceleration sensor in relation with centrifugal force of rotating Wheel body(10) with Bottom side of Hole bracket(40) provided inside of Air chamber bracket(30) combining structure through elastic material or gear structure. Additional announced technology adopting changing length according to turning force or converting turning force to power can be used.

And detailed method of combining Wheel body(10) and Plate(20) and Air chamber bracket(30) is like following;
First option introduce; plastic Air chamber bracket(30) formed by injection molding, which is combined through adhesive resin with aluminum Plate(20) and combine Plate(20) with Wheel body(10).

Second option introduce; over molding Air chamber bracket(30) to aluminum Plate(20) and combine them with Wheel body(10).

Last option introduce; Air chamber bracket(30) formed by injection molding can be combined through adhesive resin with Wheel body(10) without Plate(20).

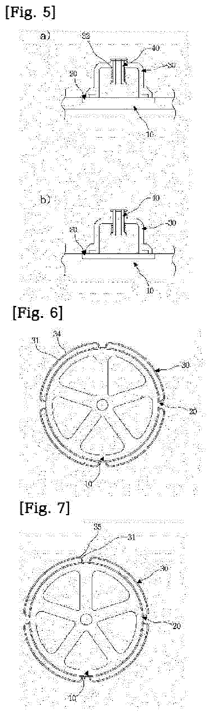

Figure 4 is cross-sectional diagram of an air chamber bracket and a hole chamber bracket A-A of a vehicle wheel in accordance with present invention and figures 5 a,b are respectively constitutional diagram of operating of a vehicle wheel of present invention in non-rotational/rotational state and detailed description is like following.

A vehicle wheel comprising; A wheel body(10) having four plate coupling portions(11), Plates(20) coupled respectively to the plate coupling portions(11), A ∩-shape Air chamber bracket(30) each having an Air chamber bracket hole(31) formed on an upper surface thereof and respectively coupled the upper surface of the plates(20), an Air chamber brackets(30) providing Air chamber bracket spring settings(32) at upper side of inner side. and a hollow cylindrical Hole bracket(40) moves up and down providing Hole bracket spring settings(41) at its side, Spring(42) provided in the middle of Air chamber bracket spring settings(32) and Hole bracket spring settings(41). Also, Air Chamber brackets(30) provides Hole bracket cap settings(33) at the upper side thereof and Hole bracket(40) couples with Hole bracket cap(43) at the end of its upper side. If Hole bracket cap(43) is metal or synthetic resins coming with bigger specific gravity compared to Hole bracket(40), Hole bracket(40) will effectively come out of Wheel body(10) by centrifugal force.

Above Hollow cylindrical Hole bracket(40) normally stays within inside of Air chamber bracket(30) at low speed or stop state described as in figure 6-a, and comes out of Air chamber bracket(30) pat high speed as in figure 6-b.

This will eventually changes air circulation path between space formed inside of Air chamber bracket(30) and Wheel bode(10) and tire so that minimizes noise induced from different frequency of low speed and high speed driving.

Also, Air chamber bracket(30) comes with injection molding providing wide coverage of design availability. Therefore this will ease down forming air circulation path and partition described at Japan patent announcement No 05819340 figure 4.

Figure 6 is a side view of No 1 embodiment of a vehicle wheel present invention and figure is a side view of No 2 embodiment of a vehicle wheel present invention and detailed description is like following.

A vehicle wheel comprising; Air chamber bracket hole(31) providing Air chamber bracket planar part(34) forming 90° angle of each Air chamber bracket hole(31) with respect to the center of the wheel and Air chamber bracket hole(31) providing air chamber bracket slope part(35) forming 90° angle of each Air chamber bracket hole(31) with respect to the center of the wheel. Also it is certainly possible to add multiple Air chamber bracket hole(31) to single Air chamber bracket(30). In additional, it is also possible to provide Air chamber bracket hole(31) to a point where centrifugal force due to rotation of Wheel(10) is the highest or where damage from impact is minimized.

The present invention is described with figure of embodiment and examples, however a person of ordinary skill in the pertinent art will acknowledge that various remodeling and change can be within the boundary of idea and field of the invention.
10. Wheel body 11. Plate coupling portions
20. Plate 30. Air chamber bracket
31. Air chamber bracket hole 32. Air chamber bracket spring settings
33. Hole bracket cap settings 34. Air chamber bracket planar part
35. air chamber bracket slope part 40. Hole bracket
41. Hole bracket spring settings 42. Spring
43. Hole bracket cap

## Claims

1. A vehicle wheel comprising;
A wheel body(10) having four plate coupling portions(11);
Plates(20) coupled respectively to the plate coupling portions(11);
A ∩-shape Air chamber bracket(30) each having an Air chamber bracket hole(31) formed on an upper surface thereof and respectively coupled the upper surface of the plates(20);
A hollow cylindrical Hole bracket(40) which is coupled through the Air chamber bracket hole(31) and moves up and down followed by rotation of the Wheel body(10);

2. According to Claim 1
A vehicle wheel featuring Hole bracket(40) moving upper side in proportional with moving speed of Wheel body(10);

3. According to Claim 1
A vehicle wheel comprising; an Air chamber brackets(30) providing Air chamber bracket spring settings(32) at upper side of inner side. and a Hole bracket(40) providing Hole bracket spring settings41) at its side, Spring(42) provided in the middle of Air chamber bracket spring settings(32) and Hole bracket spring settings(41);

4. According to Claim 3
A vehicle wheel comprising; Air Chamber brackets(30) providing Hole bracket cap settings(33) at the upper side thereof;

5. According to Claim 3
A vehicle wheel comprising; Hole bracket(40) coupled with Hole bracket cap(43) at the end of its upper side;

6. According to Claim 1 and 3
A vehicle wheel comprising; Air chamber bracket hole(31) providing Air chamber bracket planar part(34) forming 90° angle of each Air chamber bracket hole(31) with respect to the center of the wheel.

7. According to Claim 1 and 3
A vehicle wheel comprising; Air chamber bracket hole(31) providing air chamber bracket slope part(35) forming 90° angle of each Air chamber bracket hole(31) with respect to the center of the wheel.
